(19) Europäisches Patentamt
European Patent Office
Office européen des brevets

(11) Veröffentlichungsnummer: **0 220 338**
**A1**

# (12) EUROPÄISCHE PATENTANMELDUNG

(21) Anmeldenummer: **85114056.6**

(22) Anmeldetag: **05.11.85**

(51) Int. Cl.⁴: **C 12 L 9/00**

(30) Priorität: **27.09.85 DE 3534586**

(43) Veröffentlichungstag der Anmeldung: **06.05.87**
**Patentblatt 87/19**

(84) Benannte Vertragsstaaten: **AT BE CH DE FR GB IT LI LU NL SE**

(71) Anmelder: **Schiller, Jakob, Bahnhofstrasse 21, D-8359 Aussernzell (DE)**

(72) Erfinder: **Schiller, Jakob, Bahnhofstrasse 21, D-8359 Aussernzell (DE)**

## (54) Gärsicherheitsglas und Verfahren zum luftdichten Verschliessen eines Gärgutbehälters mit Hilfe des Gärsicherheitsglases.

(57) Die Erfindung betrifft ein Gärsicherheitsglas (1) für Most, Wein u.dgl. sowie ein Verfahren zum luftdichten Verschließen eines Gärgutbehälters mit Hilfe des Gärsicherheitsglases. Dieses Gärsicherheitsglas ist ein S-förmig gebogenes Glasrohr, bestehend aus zwei parallelen äußeren Schenkeln (2, 3) und einem zu diesen in etwa parallelen inneren dritten Schenkel (4), der an seinen Enden durch Bögen (9, 10) mit den beiden äußeren Schenkeln verbunden ist, von denen der eine über eine Abdichtung (11) mit dem Innenraum eines die Gärflüssigkeit enthaltenden Gefäßes in Verbindung bringbar ist und der andere eine Füllöffnung (8) aufweist. Um zu vermeiden, daß nach dem Gärvorgang das flüssige Gärgut durch die beim Abzapfen eindringende Luft verunreinigt und sauer wird, wird vorgeschlagen, das Gärsicherheitsglas so auszubilden, daß sich in dem inneren Schenkel zwei übereinander angeordnete, kugelförmige Erweiterungen (5, 6) befinden, daß der die Einfüllöffnung aufweisende äußere Schenkel eine dritte kugelförmige Erweiterung (7) besitzt, und daß die untere kugelkörmige Erweiterung des inneren Schenkels und die kugelförmige Erweiterung des äußeren Schenkels und der beide verbindende Glasrohrbogen des Gärsicherheitsglases nach dem Ende des Gärvorganges mit einer desinfizierenden Flüssigkeit, insbesondere einem Alkohol, durch die Einfüllöffnung füllbar sind, die mit einer Dichtungseinrichtung verschließbar ist, die sich zum Ablassen des Gärgutes aus dem verschlossenen Behältnis zwecks Luftzufuhr öffnen läßt.

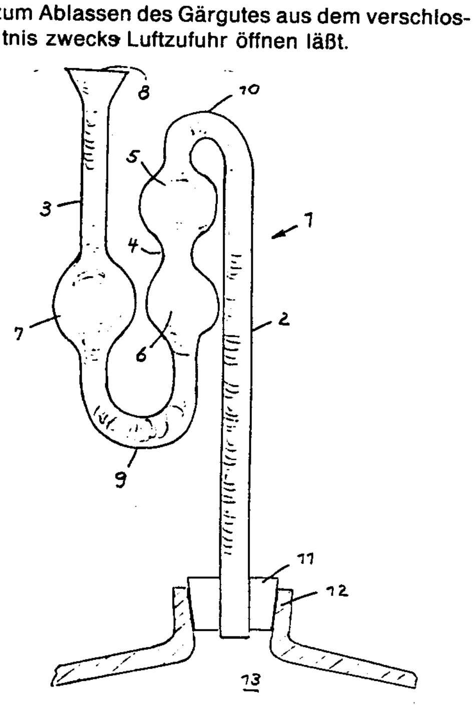


EP 0 220 338 A1

Gärsicherheitsglas und Verfahren zum luftdichten Verschließen eines Gärgutbehälters mit Hilfe des Gärsicherheitsglases

Die Erfindung betrifft ein Gärsicherheitsglas gemäß dem Oberbegriff des Anspruchs 1 sowie ein Verfahren zum luftdichten Verschließen eines flüssiges Gärgut enthaltenden Behälters mit Hilfe eines solchen Gärsicherheitsglases.

Die bisher bei der Gärung von Most, Wein u.dgl. verwendeten Gläser oder Glasrohre hatten die Aufgabe, das Gärgut während des Gärvorganges luftdicht zu verschließen. Nach dem Vergären wurde das Gärgut zugepfropft. Wollte man den Most, Wein oder ähnliche Flüssigkeiten danach durch einen Ablasshahn aus dem sie aufnehmenden Gefäß, beispielsweise Faß, abfüllen, so musste der Pfropfen gelockert werden, wodurch Luft in das Behältnis eingesaugt wurde, durch die insbesondere der Most, also der Apfelwein, nach einigen Monaten sauer und zäh geworden ist.

Die Aufgabe der Erfindung besteht deshalb darin, ein Gärsicherheitsglas zu entwickeln, das nach dem Ende des Gärvorganges, das dadurch sichtbar wird, daß kein Gas mehr durch das Gärrohr entweicht, das durch einen Gummi- oder Korkstopfen hindurchgeführt ist, der den das flüssige Gärgut aufnehmenden Behälter verschließt, zum Abfüllen des Gärgutes verwendbar ist, ohne daß Luft in den Behälter eingesaugt wird.

Diese Aufgabe wird, was die Ausgestaltung des Gärsicherheitsglases anbelangt, durch das Kennzeichen des Anspruchs 1 gelöst, und was das Verfahren anbelangt, durch die im Anspruch 6 aufgeführten Maßnahmen.

0220338

Durch die gekennzeichnete Konstruktion des Gärsicherheitsglases wird erreicht, daß die in dem Sicherheitsglas befindliche desinfizierende Flüssigkeit beim Öffnen des Ablasshahnes nicht in den das Gärgut enthaltenden Behälter gelangt. Die Abmessungen des Gärsicherheitsglases sind, insbesondere was die Durchmesser der kugelförmigen Erweiterungen anbelangt, an die Größe der das Gärgut aufnehmenden Behältnisse anzupassen.

Mit Hilfe der auf die Einlassöffnung aufgesetzten Abdichtungseinrichtung, die, gemäß einer vorteilhaften Ausgestaltung des Erfindungsvorschlages, ein Gummilippenventil sein kann, gelangt zwar Luft beim Öffnen des Ablasshahns in das Gärsicherheitsglas,wird dort jedoch in den kugelförmigen Erweiterungen durch intensives Vermischen mit der Desinfizierungsflüssigkeit, also beispielsweise einem Alkohol, desinfiziert und damit keimfrei gemacht, so daß sie, wenn sie in das Behältnis gelangt, aus dem das Gärgut abgelassen wird, keimfrei ist und das Gärgut nicht verunreinigt.

Wird dann der Ablasshahn geschlossen, so schließt sich auch das Gummilippenventil oder die verwendete andere Dichtungseinrichtung, wodurch auch das Desinfizierungsmittel im Gärsicherheitsglas luftdicht abgeschlossen wird und nicht verdunstet.

Dadurch bleibt der Most, Wein o. dgl. bis zum endgültigen Verbrauch sehr lange Zeit qualitativ unberührt.

Die Erfindung wird nachfolgend anhand des in der Zeichnung dargestellten Ausführungsbeispieles eines Gärsicherheitsglases näher erläutert.

Das schematisch dargestellte Gärsicherheitsglas 1 hat ganz allgemein die Gestalt eines S-förmig gebogenen Glasrohres, bestehend aus zwei parallelen oder nahezu parallelen äußeren Schenkeln 2, 3 und einem dazwischenbefindlichen, zu den beiden äußeren Schenkeln ebenfalls parallelen oder nahezu parallelen inneren Schenkel 4, dessen oberes und unteres Ende über Rundbögen 9, 10 mit den beiden äußeren Schenkeln verbunden ist. Das untere Ende des einen äußeren Schenkels 2 ist in einen aus Gummi oder Kork bestehenden Pfropfen 11 eingesteckt, der in die obere Öffnung 12 eines das flüssige Gärgut aufnehmenden Behältnisses 13, beispielsweise eines Fasses, luftdicht eingepresst ist, von dem in der Zeichnung nur ein Teil der oberen Wand dargestellt ist.

Das obere Ende des anderen äußeren Schenkels 3 weist eine trichterförmige Einfüllöffnung 8 auf, die durch ein nicht dargestelltes Gummilippenventil luftdicht verschließbar ist.

In dem inneren Schenkel 4 befinden sich zwei übereinander angeordnete kugelförmige Erweiterungen 5, 6 des Glasrohres und in dem äußeren Schenkel 3 eine solche Erweiterung 7. Die letztgenannte Erweiterung liegt der unteren kugelförmigen Erweiterung 6 des inneren Schenkels gegenüber, d.h. in etwa auf gleicher Höhe mit dieser.

Bei der Anwendung des oben beschriebenen Gärsicherheitsglases wird nun so verfahren, daß vor Ingangsetzung des Gärprozesses das Gärsicherheitsglas 1 mit Hilfe des Stopfens 11 auf das das Gärgut enthaltende Gefäß 13 aufgesetzt wird, wobei als Gärgut gewöhnlich frisch gepresster Saft Verwendung findet. Danach wird das Sicherheitsglas durch die Einfüllöffnung 8 bis zu den beiden unteren kugelförmigen Erweiterungen 6, 7 mit Wasser gefüllt, durch das hindurch beim Vergären das Gas perlt und durch die Einfüllöffnung 8 entweicht.

Nach Beendigung des Gärvorganges, die dadurch kenntlich wird, daß kein Gas mehr entweicht, wird das durch das Vergären verunreinigte Gärsicherheitsglas vom Behälter 13 abgenommen, ausgekocht und peinlich genau gereinigt, dann sofort wieder auf den Behälter 13 mit Hilfe des Stopfens 11 aufgesetzt, woraufhin es durch die Einfüllöffnung 8 mit einem flüssigen Desinfizierungsmittel, beispielsweise einem Alkohol, bis zu den unteren kugelförmigen Erweiterungen 6, 7 gefüllt wird. Danach wird die Einfüllöffnung 8 mit Hilfe eines Gummilippenventils verschlossen.

Wird dann der am Behälter 13 befindliche Ablasshahn geöffnet, so öffnet sich gleichzeitig das Gummilippenventil, so daß Luft in den Schenkel 3 eingesaugt wird, die durch die in den kugelförmigen Erweiterungen 6, 7 und dem Bogen 9 befindliche Desinfizierungsflüssigkeit hindurchtritt und dabei eine Verwirbelung der Flüssigkeit in den genannten kugelförmigen Erweiterungen verursacht. Diese Verwirbelung hat eine intensive Vermischung von Luft und Flüssigkeit zur Folge, wodurch die Luft desinfiziert wird und nach dem Verlassen der kugelförmigen Erweiterung 6 und dem Hindurchtritt durch die Erweiterung 5 durch den Schenkel 2 hindurch in das Gärgefäß 13 gelangt.

Nach dem Schließen des Ablasshahnes schließt sich auch das Gummilippenventil, wodurch das im Gärsicherheitsglas verbleibende Desinfizierungsmittel luftdicht abgeschlossen wird und nicht verdunsten kann.

Dadurch wird erreicht, daß der Most, Wein o. dgl. bis zum endgültigen Verbrauch seine Qualität beibehält, also ein gesundes Naturprodukt bleibt. Versuche haben gezeigt, daß sich über drei Jahre hindurch in mit einem solchen Gärsicherheitsglas versehenen Gärgefäß ein Most mit Weinqualität

erhalten läßt, ein Sauerwerden also vermieden wird.

Es versteht sich, daß als Desinfizierungsmittel jede beliebige, geeignete chemaische Flüssigkeit Verwendung finden kann, wobei sich allerdings Alkohol als besonders zweckmäßig erwiesen hat. Auch ist die Anordnung der unteren kugelförmigen Erweiterungen 6, 7 im Gärsicherheitsglas insofern nicht zwingend, als diese beiden Erweiterungen nicht auf demselben Niveau liegen müssen.

Wesentlich ist, daß das Flüssigkeitsfüllvolumen des den äußeren, die Einfüllöffnung 8 aufweisenden Schenkels 3 und den inneren Schenkel 4 verbindenden Rohrbogens 9 mit dem Volumen der kugelförmigen Erweiterung 6 oder Erweiterungen 5, 6 des inneren Schenkels so abgestimmt ist, daß das Füllvolumen dieser Erweiterung oder Erweiterungen wenigstens so groß ist, daß die in dem Rohrbogen 9 befindliche Desinfektionsflüssigkeit im Falle von Unterdruck im äußeren Schenkel 2, wie er beim Öffnen des Ablaßhahnes entsteht, vollständig aufgenommen wird, also vermieden wird, daß diese Flüssigkeit in den Leergutbehälter gelangt und den dort aufbewahrten Wein, Most o. dgl. verunreinigt. Bei Einhaltung dieser Bedingung sind sonst die Größenverhältnisse der Schenkellängen, Glasbögen und der verschiedenen Erweiterungen variabel.

PATENTANWÄLTE
TISCHER, KERN & BREHM


Albert-Rosshaupter-Strasse 65 · D 8000 München 70 · Telefon (089) 7605520 · Telex 5214950 isar d · Telegramme Kernpatent München

Jakob Schiller
Bahnhofstr. 21
D-8359 Außernzell

Schi-7422

## Patentansprüche

1. Gärsicherheitsglas für Most, Wein u. dgl. aus einem S-förmig gebogenen Glasrohr, bestehend aus zwei in etwa parallelen äußeren Schenkeln und einem zu diesen in etwa parallelen inneren dritten Schenkel, der an seinen Enden durch Bögen mit den beiden äußeren Schenkeln verbunden ist, von denen der eine über eine Abdichtung mit dem Innenraum eines die Gärflüssigkeit enthaltenden Gefäßes in Verbindung bringbar ist und der andere eine Einfüllöffnung aufweist, dadurch gekennzeichnet, daß wenigstens in dem inneren Schenkel (4) das Glasrohr wenigstens eine Erweiterung (6) besitzt, daß der die Füllöffnung (8) aufweisende äußere Schenkel (3) mit dem inneren Schenkel durch einen Rohrbogen (9) des Gärsicherheitsglases (1) verbunden ist, dessen bis zur Höhe der Erweiterung (6) gemessenes Flüssigkeitsfüllvolumen kleiner ist als das Volumen der Erweiterung (6) und daß das Volumen des Rohrbogens (9) nach dem Ende

des Gärvorgangs mit einer desinfizierenden Flüssigkeit, insbesondere einem Alkohol, durch die Einfüllöffnung füllbar ist und die Einlaßöffnung mit einer Dichtungseinrichtung verschließbar ist, die sich zum Ablassen des Gärgutes aus dem verschlossenen Behältnis zwecks Luftzufuhr öffnen läßt.

2. Gärsicherheitsglas nach Anspruch 1, dadurch gekennzeichnet, daß sich in dem inneren Schenkel (4) zwei übereinander angeordnete Erweiterungen (5, 6) befinden, daß der die Einfüllöffnung (8) aufweisende äußere Schenkel (3) eine dritte Erweiterung (7) besitzt und daß die untere Erweiterung (6) des inneren Schenkels (4) und die Erweiterung (7) des äußeren Schenkels (3) durch den Rohrbogen (9) verbunden sind.

3. Gärsicherheitsglas nach Anspruch 2, dadurch gekennzeichnet, daß die dritte Erweiterung (7) des Sicherheitsglases, die sich in dem die Einfüllöffnung (8) enthaltenden Schenkel (3) befindet, in Höhe der unteren (6) der beiden erstgenannten Erweiterungen des inneren Schenkels (4) angeordnet ist.

4. Gärsicherheitsglas nach einem der Ansprüche 1 bis 3, dadurch gekennzeichnet, daß die Erweiterungen (5, 6, 7) in dem inneren Schenkel (4) bzw. äußeren Schenkel (3) kugelförmig ausgebildet sind.

5. Gärsicherheitsglas nach einem der Ansprüche 1 bis 4, dadurch gekennzeichnet, daß die Einfüllöffung (8) des äußeren Schenkels (3) trichterförmig ausgebildet ist.

6. Gärsicherheitsglas nach einem der Ansprüche 1 bis 4, dadurch gekennzeichnet, daß die die Einfüllöffnung (8) des äußeren Schenkels (3) verschließende Dichtungseinrichtung ein Gummilippenventil ist.

7. Gärsicherheitsglas nach einem der Ansprüche 1 bis 4, dadurch gekennzeichnet, daß die die Einfüllöffnung (8) des äußeren Schenkels (3) verschließende Dichtungseinrichtung ein Wattebausch ist.

8. Gärsicherheitsglas nach einem der Ansprüche 1 bis 4, dadurch gekennzeichnet, daß die die Einfüllöffnung (8) des äußeren Schenkels (3) verschließende Dichtungseinrichtung eine Sogmembrane ist.

9. Verfahren zum luftdichten Verschließen eines flüssiges Gärgut enthaltenden Behälters durch Verwendung des Gärsicherheitsglases nach einem der Ansprüche 1 bis 8, dadurch gekennzeichnet, daß nach dem Vergären das Gärsicherheitsglas von dem das Gärgut enthaltenden Behältnis abgenommen, ausgekocht und gereinigt wird, daraufhin wieder auf den Gärgutbehälter abdichtend aufgesetzt wird, danach das Volumen des den inneren und den mit der Einfüllöffnung versehenen äußeren Schenkel verbindenden Rohrbogens bis zu wenigstens einer kugelförmigen Erweiterung mit einer an sich bekannten desinfizierenden Flüssigkeit durch die Einfüllöffnung gefüllt wird, die daraufhin durch ein Gummilippenventil verschlossen wird, das sich beim Ablassen des Gärgutes öffnet, wodurch die in das Gärsicherheitsglas eintretende Luft die in der oder den kugelförmigen Erweiterungen befindliche Desinfizierungsflüssigkeit verwirbelt und selbst desinfiziert wird und keimfrei in den Gärgutbehälter gelangt.

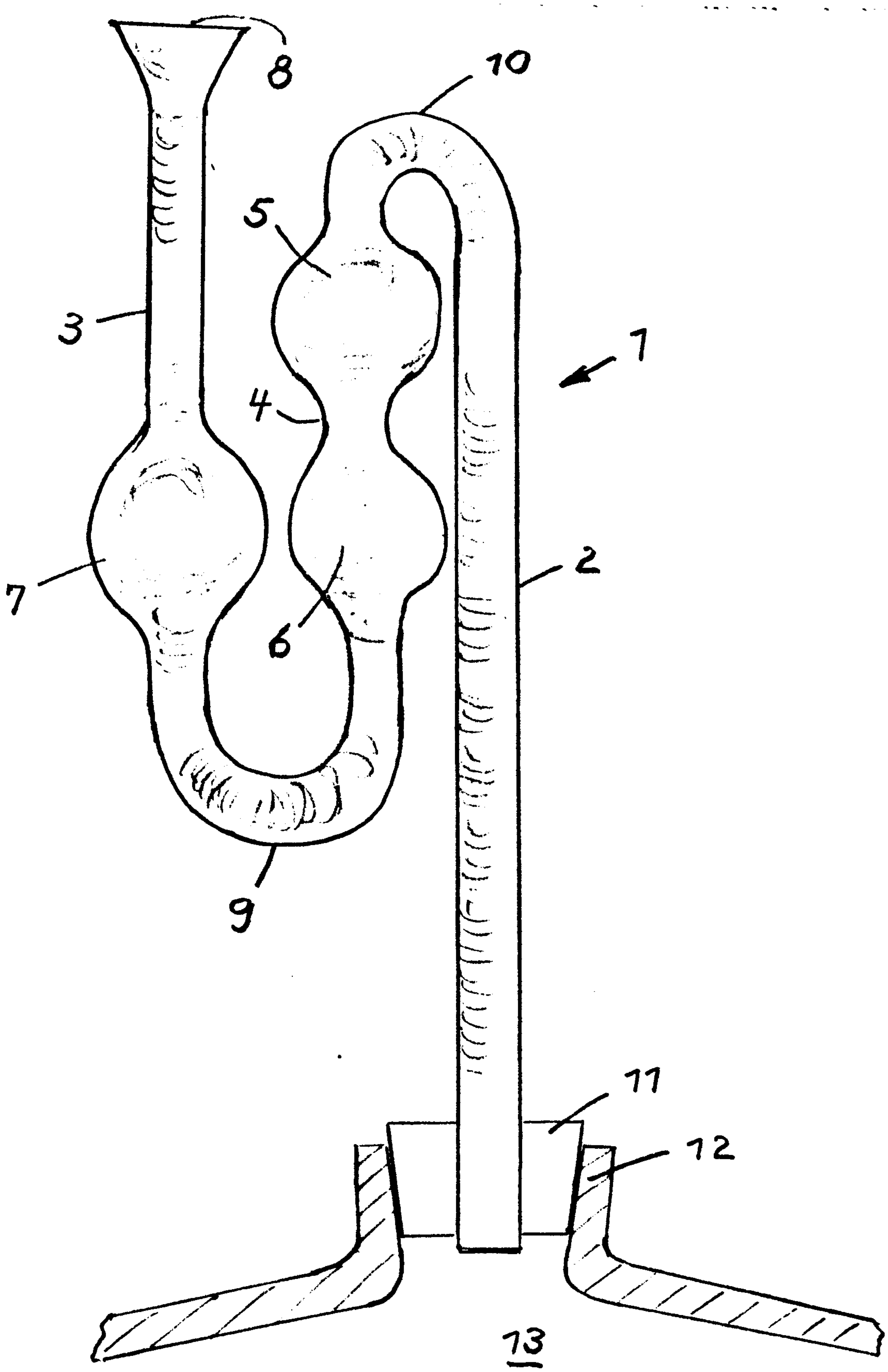
8
10
5
3
1
4
7
2
6
9
11
12
13

# EUROPÄISCHER RECHERCHENBERICHT

0220338
Nummer der Anmeldung

EP 85 11 4056

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | CH-A- 100 696 (H.KELLER)<br>* Figur; Patentanspruch; Seite 1, Spalte 1, Zeile 12 - Seite 2, Spalte 1, Zeilen 32 *<br>--- | 1-9 | C 12 L 9/00 |
| A | CH-A- 249 287 (L.ANTILLE)<br>* Figur; Seite 2, Zeilen 27-31 *<br>----- | 6,9 | |
| | | | **RECHERCHIERTE SACHGEBIETE (Int. Cl.4)** |
| | | | C 12 L |

Der vorliegende Recherchenbericht wurde für alle Patentansprüche erstellt.

| Recherchenort | Abschlußdatum der Recherche | Prüfer |
|---|---|---|
| DEN HAAG | 03-02-1987 | COUCKE A.O.M. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82